# DEMANDE DE BREVET EUROPEEN

(11) **EP 3 939 838 A1**
(43) Date de publication de la demande: **19.01.2022**
(21) Numéro de dépôt: 21184218.2
(22) Date de dépôt: 07.07.2021
(51) Int. Cl.: B60R 13/04, B60J 11/06, B60J 5/04, H02G 3/04

(54) **DISPOSITIF DE PROTECTION TEMPORAIRE D'UNE SURFACE**

(30) Priorité: 10.07.2020 BE 202005517
(71) Demandeur: NMC S.A., 4731 Eynatten (BE)
(72) Inventeur: MAYERES, Jean-Pierre, 4700 Eupen (BE); DUJARDIN, René, 4730 Raeran (BE)
(74) Mandataire: Office Freylinger

(57) **Abrégé**

L'invention propose un dispositif de protection (10) d'une surface, en particulier une surface à protéger comprenant des sections concaves et/ou convexes, configuré en particulier à une installation amovible sur ladite surface à protéger, notamment une surface à protéger adjacente à une arête de carrosserie de véhicule, comprenant un corps d'amortissement (12) allongé formé d'un profilé en mousse polymère et comprenant une face dorsale (121), et une face frontale (123) opposée à la face dorsale ; la face dorsale (121) étant adhésivée au moins sur une partie de sa superficie, et le corps d'amortissement comprenant une pluralité de découpes parallèles en V, formant un angle de 70° à 110°, notamment perpendiculaires, par rapport à l'allongement du corps d'amortissement (12), dans lequel le sommet (S) de chaque découpe en V est orienté vers la face dorsale (121) et l'ouverture (O) vers la face frontale (123), le sommet (S) étant situé à une distance d de la face dorsale telle que 0 < d ≤ 0,5 D, D étant la distance séparant la face frontale de la face dorsale et 3 mm ≤ D ≤ 100 mm, ainsi qu'un véhicule muni d'un tel dispositif de protection et un procédé de fabrication d'un tel dispositif de protection.

## Description

### Domaine technique

La présente invention concerne, de manière générale, des protections temporaires pour des surfaces, appelées par la suite « surface(s) à protéger » ou simplement « surface(s) », en particulier des surfaces comprenant des sections concaves. L'invention concerne, de manière plus spécifique, un dispositif de protection destiné à être installé de manière amovible sur une surface de carrosserie d'un véhicule ou autres pour prévenir les dommages pendant le transport du constructeur au revendeur ou d'une manière générale au client.

La réparation de dommages, même mineurs, occasionnés à la carrosserie des véhicules automobiles neufs peut être difficile, prend beaucoup de temps et est onéreuse. Par conséquent, les constructeurs sont motivés à protéger les véhicules automobiles contre tous ces types de dommages avant de livrer le véhicule au client final. Ceci concerne en particulier les bosses et éraflures mineures susceptibles d'être occasionnés aux portières de véhicule, aux capots, aux pare-chocs ou aux coffres pendant le chargement, le transport et le déchargement des véhicules.

Les constructeurs équipent parfois les portières du véhicule d'une garniture horizontale formée d'un matériau élastique fixée de façon permanente le long du côté des portières de véhicule de manière à éviter les bosses et les éraflures lorsque les portières sont ouvertes et heurtent un véhicule voisin ou un autre obstacle. Ces garnitures sont cependant plutôt fragiles et surtout elles peuvent hypothéquer l'esthétique générale du véhicule.

Les constructeurs recourent donc souvent à une protection temporaire des tôles de carrosserie des voitures pendant le transport de l'usine au revendeur, où ces protections sont enlevées avant la remise du véhicule au client. L'opération de transport, par camion, train ou bateau par exemple, nécessite de nombreux déplacements des véhicules. Chaque déplacement augmente évidemment le risque de heurter un obstacle ou autre véhicule et donc le risque de dommages à la carrosserie. De plus, ces déplacements requièrent à leur tour de fréquentes ouvertures des portières et comme les voitures doivent être garées très près les unes des autres, le risque que des bosses ou des éraflures soient occasionnées par les portières du véhicule augmente.

Divers dispositifs ont été développés pour être installés en permanence sur l'arête des portières de véhicule ou similaires. Ces dispositifs comprennent généralement un élément déformable en matériaux plastiques ou caoutchouc moussés, comme c'est le cas dans le brevet US 4 871 205.

Même si les dispositifs sont réalisés en mousse flexible, les contraintes de tension et de compression à l'intérieur d'une mousse sont d'autant plus importantes que la mousse est épaisse et que le rayon de courbure imposé par la forme de la surface est faible. Une solution peut être d'utiliser des mousses (essentiellement) à cellules ouvertes qui sont encore plus flexibles que les mousses à cellules fermées, mais cette augmentation de flexibilité va à l'encontre des capacités d'absorption de chocs et elle est donc a priori contraire à la fonction-même du dispositif de protection.

Il existe des dispositifs de protection qui possèdent des incisions transversales afin d'assurer une flexibilité maximale quand celui-ci est placé sur un élément convexe (voir EP 1 930 215), par exemple des appliques décoratives latérales, etc.

Cependant au cours de ces dernières années, le design des carrosseries et notamment des portières de véhicules neufs a fortement évolué et celles-ci ont de plus en plus souvent aussi des sections concaves ou bombées vers l'intérieur outre les sections convexes inévitables. Les dispositifs de protection adhésivés connus généralement utilisés pour ce type d'application, qui doivent présenter une certaine épaisseur pour pouvoir réaliser leur fonction de protection, épousent très difficilement une forme de carrosserie concave. Il en résulte des tensions et finalement un décollement de ces dispositifs connus. Ceci est d'autant plus vrai que les rayons de courbures de concavité ou de convexité sont faibles, c'est-à-dire que les surfaces présentent des formes complexes.

### Objet de l'invention

Un objet de la présente invention est de proposer un dispositif de protection temporaire, facile à installer sur (et à retirer d')une surface, en particulier une surface pouvant comprendre des sections (fortement) concaves, comme des surfaces de carrosserie d'un véhicule. En outre, il serait souhaitable qu'un tel dispositif puisse s'utiliser indifféremment aussi dans le cas de surfaces planes ou de surfaces présentant (aussi) des sections convexes, c'est-à-dire un dispositif de protection utilisable tant pour des surfaces relativement planes que pour des surfaces présentent des formes complexes. Finalement, il serait également souhaitable de proposer une solution qui puisse (également) s'utiliser pour la protection plus particulièrement d'arêtes de carrosserie, comme par exemple le bord d'une portière, etc.

### Description générale de l'invention

Afin d'atteindre l'objet mentionné ci-dessus, la présente invention propose, dans un premier aspect, un dispositif de protection (temporaire) d'une surface, en particulier une surface comprenant des sections concaves et/ou convexes, destiné en particulier à, respectivement configuré pour, une installation amovible sur ladite surface à protéger, notamment une surface à protéger adjacente à une arête de carrosserie de véhicule. Le dispositif de protection comprend un corps d'amortissement allongé formé d'un profilé en mousse polymère et comprenant une face dorsale, une face frontale opposée à la face dorsale ; la face dorsale étant adhésivée, de préférence munie d'une ou de plusieurs bandes adhésives parallèles à l'allongement du corps d'amortissement, et le corps d'amortissement comprend une pluralité de découpes ou tranchées (à fonds) parallèles en (forme de) V sur au moins une partie de sa longueur, chaque (fond de) découpe ou tranchée en V formant un angle de 90° ± 20°, de préférence de 90° ± 10°, en particulier de 90° ± 5° avec (la direction de) l'allongement du corps d'amortissement, notamment perpendiculaire à l'allongement du corps d'amortissement. Dans ledit dispositif de protection, le sommet (ou fond) de chaque découpe en V est orienté vers la face dorsale et l'ouverture vers la face frontale, le sommet étant situé à une distance d de la face dorsale telle que 0 ≤ d ≤ 0,5 D, D étant la distance (maximale) séparant la face frontale de la face dorsale (c'est-à-dire a priori l'épaisseur maximale du corps d'amortissement) et 3 mm ≤ D ≤ 100 mm, de préférence 5 mm ≤ D ≤ 90 mm. Dans la pratique et en fonction de l'épaisseur du corps d'amortissement, de la flexibilité de la mousse qui le forme et des rayons de courbures de concavité attendus/requis pour l'application envisagée, le sommet de la découpe en V peut se positionner de 0 à 30 mm de la face dorsale adhésivée, souvent de 0 à 10 mm, voire en particulier de 0 à 5 mm. A noter que même dans le cas d'une distance sensiblement égale à 0, le dispositif de protection selon l'invention peut être maintenu ensemble par la ou les bandes adhésives continues sur la face dorsale le long de l'axe allongé du corps d'amortissement.

Le dispositif de protection selon l'invention est particulièrement approprié pour toutes les surfaces, même celles comprenant des endroits ou sections concaves. En effet, grâce aux découpes (en V), le corps d'amortissement peut se déformer facilement non seulement pour épouser des formes convexes, mais surtout grâce à ces découpes en V le corps d'amortissement peut tout aussi facilement se déformer dans le sens inverse pour épouser des formes concaves. Ceci est particulièrement vrai, lorsqu'une épaisseur importante du corps d'amortissement est souhaitable. Outre l'intérêt direct et évident de l'épaisseur du corps d'amortissement pour sa fonction de protection, le dispositif de protection selon l'invention est beaucoup plus facile à installer, parce qu'il est nettement plus flexible, même avec ces épaisseurs élevées. Un autre avantage important résultant de cette flexibilité est que le dispositif de protection adhère sur toute sa longueur et ne risque pas d'être décollé par les tensions internes qu'impose l'installation sur des surfaces à sections fortement concaves (et/ou convexes) sur un corps d'amortissement similaire ne comprenant pas ces découpes en V. L'invention permet donc également de réduire significativement le risque de produire des griffes ou abrasions locales qui se produisent lorsque de la poussière, etc. s'installe sur la bande adhésive décollée par endroits.

Les inventeurs ont trouvé qu'il est particulièrement avantageux que l'angle formé par les parois des découpes en V, donc l'angle d'ouverture de la découpe en V, encore appelé angle α par la suite, se situe entre 5 et 50 °, de préférence entre 10 et 40 °, en particulier entre 15 et 35 °. En effet, un tel angle permet de déformer le dispositif de protection aux formes concaves et/ou convexes afin que celui-ci épouse ces surfaces en tout point sans générer des contraintes de flexion dans le corps d'amortissement qui risqueraient de décoller le dispositif aux endroits concaves, ni de réduire significativement l'épaisseur utile d'amortissement aux endroits convexes.

Comme déjà mentionné, l'homme de métier aura souvent comme contraintes dictées par l'application prévue pour le dispositif de protection, d'une part une valeur de rayon de courbure de concavité minimal, r, auquel le dispositif doit pouvoir se conformer, et d'autre part, une épaisseur (minimale), D, du corps d'amortissement garantissant un certain degré de protection de la surface à protéger.

Bien qu'il soit souhaitable de pouvoir choisir l'épaisseur indépendamment du rayon de courbure de concavité minimal, il existe cependant des limites. En effet, en théorie, l'épaisseur D du corps d'amortissement, respectivement la profondeur D-d des découpes en V, ne peut en principe pas être choisie de manière à être supérieure au rayon de courbure de concavité r, auquel cas les plans formés par les découpes en V adjacentes se couperaient en une droite qui est située à une distance plus faible de la face dorsale que la face frontale/l'épaisseur. En d'autres mots, il n'y aurait plus de sections de la face frontale sans découpes et l'épaisseur initiale de la mousse serait réduite lors de la création des découpes en V. Cependant, dans la pratique, les inventeurs ont déterminé que les endroits très concaves d'une surface à protéger sont souvent les endroits les moins exposés aux chocs et qu'il est donc possible, localement, de réduire l'écartement E entre deux sommets (ou fonds) adjacents de découpes en V à une valeur inférieure à la largeur de l'ouverture O théorique à la face frontale du corps d'amortissement. Bien qu'on réduise ainsi localement l'épaisseur du corps d'amortissement, ceci n'a que peu d'effet sur la capacité d'amortissement locale étant donné que ces endroits très concaves sont moins exposés.

Par conséquent, bien que l'écartement E entre les sommets et l'angle α des découpes en V soient souvent constants sur toute la (partie de la) longueur du corps d'amortissement, ils peuvent aussi varier individuellement le long du corps d'amortissement. Ceci est notamment aussi utile, lorsque l'application et la surface sur laquelle le dispositif de protection va être fixé sont bien définies et que les besoins de protection ou de courbure sont différents d'un endroit à l'autre de ladite surface, par exemple localement des sections de surfaces très concaves.

Pour les épaisseurs ou profondeurs qui sont beaucoup faibles que le rayon de courbure de concavité, par exemple au plus la moitié de celui-ci, l'épaisseur ne représente plus un facteur limitatif et les découpes en V peuvent être dimensionnées en fonction du rayon de courbure de concavité (local) attendu. Il est alors particulièrement avantageux que l'écartement E entre deux sommets (ou fonds) adjacents de découpes en V, variable le long de la longueur du corps d'amortissement ou non, est situé entre 1 fois et 10,0 fois, de préférence entre 1,2 fois et 7,5 fois, de manière davantage préférée entre 1,4 fois et 5,0 fois et de manière particulièrement préférée entre 1,5 fois et 3,0 fois, la largeur de l'ouverture O d'une découpe en V mesurée à la face frontale. Comme l'écartement E est la somme de la distance d'ouverture O et de la distance (fermée) F séparant deux découpes en V adjacentes au niveau de la face frontale, c'est-à-dire la largeur de la face frontale « non découpée » entre deux découpes en V adjacentes, la distance F peut être située entre 0 fois et 9,0 fois, de préférence cependant entre 0,2 fois et 6,5 fois, de manière davantage préférée entre 0,4 fois et 4,0 fois et de manière particulièrement préférée entre 0,5 fois et 2,0 fois, la largeur de l'ouverture O d'une découpe en V mesurée à la face frontale.

Si l'écartement E entre deux sommets adjacents, c'est-à-dire la distance de sommet à sommet adjacent entre les « V », est choisi de manière à être proche des valeurs inférieures données ci-dessus, l'angle α pourra être plus faible (et le nombre de découpes plus important par unité de longueur du corps d'amortissement) et le dispositif de l'invention épousera généralement plus facilement des surfaces ayant un rayon de courbure de concavité réduit (r). L'angle α sera avantageusement tel que sin(α/2) = E/(2r).

Le corps d'amortissement du dispositif de protection selon l'invention comprend une pluralité de découpes parallèles en V sur au moins une partie de sa longueur, généralement sur toute sa longueur. Cependant, selon les applications, il peut être utile de prévoir sur au moins une autre partie de la longueur du corps d'amortissement une série de découpes en V qui ne sont pas parallèles entre elles, mais qui forment un angle de jusqu'à +/- 20 °, de préférence jusqu'à +/- 10 ° et de manière encore plus préférée, jusqu'à +/- 5°, entre deux découpes en V adjacentes.

Sauf indication contraire, toutes caractéristiques du dispositif de protection selon l'invention, notamment les mesures de ses dimensions, sont indiquées pour ou réalisées lorsque le corps d'amortissement est essentiellement droit, c'est-à-dire lorsque sa face dorsale est essentiellement plane ou repose sur une surface essentiellement plane.

Bien que la forme générale du dispositif de protection selon l'invention puisse varier fortement selon les besoins, la section transversale du corps d'amortissement est généralement de forme polygonale, convexe ou concave, de préférence à angles arrondis, de manière particulièrement préférée la section transversale du corps d'amortissement est de forme trapézoïdale, de préférence à angles arrondis. Il est entendu dans le contexte de l'invention que bien qu'une section de forme trapézoïdale requiert a priori deux côtés (droits) parallèles et que la face dorsale est plane, la face frontale ne doit pas nécessairement être plane, mais peut présenter une forme concave ou de préférence convexe, voire arrondie. Sauf indication contraire, toute indication d'épaisseur du corps d'amortissement signifie dans ce cas l'épaisseur ou distance maximale séparant la face dorsale de la face frontale mesurée sur la section entière.

Selon les besoins, la section du corps d'amortissement peut en outre comprendre une ou plusieurs cavités longitudinales, par exemple de section essentiellement ronde ou ovale (il s'agit donc de cavités autres que les « cavités » que forment les cellules de la mousse polymère). Celles-ci peuvent permettre de moduler la flexibilité du corps d'amortissement en cas de choc exercé sur celui-ci ou de réduire la quantité de matière en réduisant ainsi le poids du dispositif et/ou les frais de matière première requise.

Le profilé en mousse polymère du corps d'amortissement comprend généralement un ou plusieurs polymères ou copolymères polaires ou apolaires, réticulés ou non-réticulés, d'oléfine, d'uréthane, de téréphtalate, de chlorure de vinyle, de styrène, de caoutchoucs naturels ou synthétiques, de silicones, et de mélanges de ces polymères. Dans la plupart des applications, la mousse polymère aura de préférence une densité de 10 kg/m³ à 400 kg/m³, de manière davantage préférée de 15 kg/m³ à 200 kg/m³, en particulier de 20 kg/m³ à 100 kg/m³.

Les découpes en V peuvent être réalisées par tout type de méthode de transformation de mousse par enlèvement de matière : par découpe, par thermoformage, par fraisage, etc.

Dans des variantes avantageuses de l'invention, le dispositif de protection est configuré pour protéger plus particulièrement une arête de carrosserie l'arête d'un ouvrant ou battant, notamment l'arête d'une portière de véhicule. Dans un tel mode de réalisation, la surface à protéger est donc une surface adjacente à une arête de carrosserie de véhicule, notamment l'arête d'un ouvrant ou battant, en particulier l'arête d'une portière de véhicule, et le dispositif de protection comprend en outre une première et une deuxième faces latérales, la face dorsale n'étant adhésivée que sur une partie de sa superficie adjacente à la première face latérale. De manière particulièrement avantageuse, la partie non adhésivée de la face dorsale adjacente à la deuxième face latérale est configurée pour faire saillie au-delà de l'arête de carrosserie et peut ainsi protéger l'arête.

Dans un deuxième aspect, l'invention concerne un véhicule comprenant une surface de carrosserie munie (par adhésion/adhérence/collage) d'un dispositif de protection selon le premier aspect, ladite surface comprenant en particulier des sections concaves et/ou convexes, de préférence ladite surface est adjacente à une arête de la carrosserie, de manière davantage préférée adjacente à une arête d'un ouvrant ou battant, en particulier une arête d'une portière du véhicule. De préférence, le véhicule comprend une surface de carrosserie munie d'un dispositif de protection tel que décrit plus particulièrement dans le paragraphe précédent, ladite surface étant adjacente à une arête de la carrosserie, de manière davantage préférée adjacente à une arête d'un ouvrant ou battant, en particulier adjacente à une arête d'une portière du véhicule.

Un troisième aspect de l'invention propose un procédé de fabrication d'un dispositif de protection selon l'invention, le procédé comprenant les étapes de
(a) production d'un corps d'amortissement allongé en mousse polymère par extrusion,
(b) pratique de découpes en V à un angle de 70° à 110°, de préférence de 80 ° à 100°, notamment perpendiculairement par rapport au sens d'extrusion dans le corps d'amortissement,
(c) application sur la face dorsale d'au moins une matière adhésive, de préférence en au moins une bande, et
(d) éventuellement, délignage consistant à découper le corps d'amortissement ou le dispositif de protection en longueurs prédéterminées,
les étapes (b), (c) et (d) pouvant être réalisées dans n'importe quel ordre, de préférence les étapes sont réalisées dans l'ordre (a), (b), (c) et éventuellement (d).

La face dorsale est adhésivée de préférence par l'application d'une ou de plusieurs bandes parallèles de matière adhésive, par exemple une ou des bandes adhésives double face ou encore une ou des bandes longitudinales (parallèles) de colle thermofusible auto-adhésive qui est appliquée à l'état fondu sur la face dorsale. En variante, la face dorsale est munie d'une ou de plusieurs bandes adhésives simple face collées sur la face dorsale au moyen d'une colle, de préférence thermofusible, ou soudées sur la face dorsale.

La ou les bandes de matière adhésive comprennent de préférence un papier de séparation pour protéger la bande de matière adhésive avant l'emploi. Avant de coller le dispositif de protection sur une surface, le papier de séparation est enlevé, révélant ainsi la matière adhésive appliquée sur le corps d'amortissement.

Dans un mode de réalisation avantageux, la matière adhésive est une colle thermofusible auto-adhésive (hot-melt), qui est fondue dans un fondoir et pompée à travers une buse d'injection pour la déposer directement sur la face dorsale du corps d'amortissement.

Selon un mode de réalisation préféré, la matière adhésive est déposée sur un papier de séparation antiadhésif appliqué ensuite sur la face dorsale du corps d'amortissement. Le papier de séparation est enlevé avant de fixer le dispositif de protection sur une surface. Le dépôt de la matière adhésive peut se faire soit par un dispositif qui est en contact avec le papier de séparation, soit avec un dispositif qui n'est pas en contact avec le papier de séparation. Dans ce dernier cas, le papier de séparation est guidé quelques millimètres ou centimètres en dessous de la buse et la matière adhésive se dépose sur le papier.

Selon un autre mode de réalisation préféré, la matière adhésive est déposée en continu sur un rouleau de transfert rotatif, de préférence thermostatisé et antiadhésif, qui est en contact avec la face dorsale du corps d'amortissement.

Avantageusement, un gaz, de préférence l'azote, est injecté dans la matière adhésive fondue, avant son application sur la face dorsale. Ainsi, il est possible d'obtenir une structure moussée de matière adhésive. On obtient ainsi une plus grande superficie de contact pour une même quantité de colle, et une épaisseur de la piste plus grande pour un meilleur étalement lors de la pose, par exemple sur une surface rugueuse.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent :
Fig. 1(a) et (b) : sont deux vues tridimensionnelles d'un mode de réalisation avantageux d'un dispositif de protection selon l'invention, la Fig. 1(a) montrant un dispositif de protection avec la face frontale vers le haut et la Fig. 1(b) montrant le même dispositif de protection retourné avec la face dorsale vers le haut.
Fig. 2(a) et (b) : Fig. 2(a) est une coupe transversale du mode de réalisation avantageux d'un dispositif de protection selon l'invention illustré à la Fig. 1 et la Fig. 2(b) est une coupe longitudinale partielle du même dispositif de protection.

### Description d'une exécution préférée

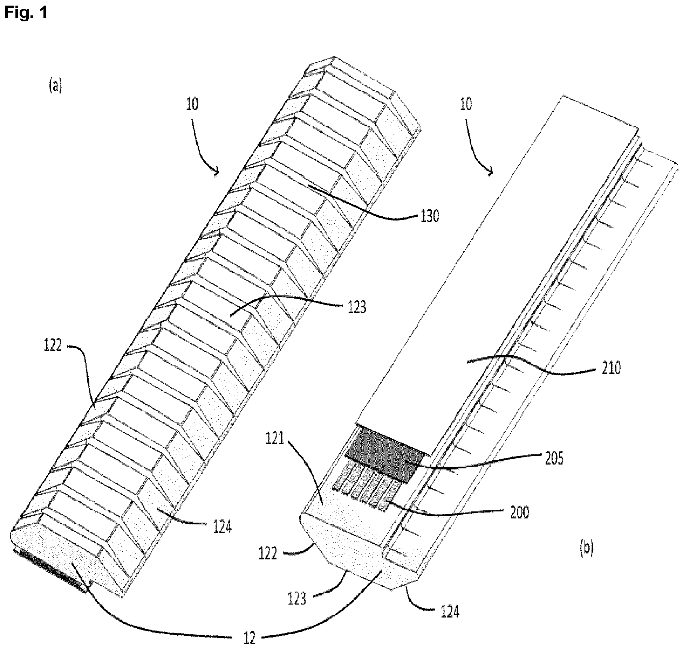

La Fig. 1 montre un mode de réalisation avantageux d'un dispositif de protection 10 allongé, configuré pour être installé en particulier sur une surface à protéger (non représentée) comprenant des sections concaves et/ou convexes, configurée en particulier à une installation amovible sur ladite surface à protéger, notamment une surface à protéger adjacente à une arête de carrosserie de véhicule. La Fig. 1(a) montre le dispositif de protection 10 comprenant un corps d'amortissement 12 avec la face frontale 123 vers le haut et la Fig. 1(b) montre le même dispositif de protection 10 retourné avec la face dorsale 121 vers le haut, la face dorsale étant adhésivée au moyen d'une ou plusieurs bandes de colle thermofusibles 200, recouvertes d'une ou plusieurs bandes adhésives 205 et d'un film ou papier de séparation 210 antiadhésif amovible.

La section transversale du corps d'amortissement 12 est essentiellement trapézoïdale avec une face dorsale 121 adhésivée, une face frontale 123 et deux faces latérales 122, 124. Le corps d'amortissement 12 présente des découpes en V 130, ces découpes en V 130 étant ici perpendiculaires à l'allongement du dispositif de protection 10 et orientées avec leur ouverture vers la face frontale 123.

Le mode de réalisation illustré convient pour l'application sur une surface quelconque, qu'elle soit convexe, concave ou plane, voire même une surface adjacente à une arête à protéger, comme le bord d'un battant d'une portière de véhicule par exemple. Pour permettre la protection d'une surface et même plus particulièrement aussi la protection d'une arête avec un même dispositif, il est avantageux de prévoir sur la face dorsale une section adhésive limitée à une partie de celle-ci proche de la face latérale 122, de sorte que le dispositif de protection 10 puisse être monté sur une surface adjacente à une arête et que la partie du corps d'amortissement du côté de la face latérale 124 puisse faire saillie au-delà de l'arête ou du bord de carrosserie par exemple à protéger. Si cela est souhaitable ou souhaité, la partie longitudinale du côté de la face latérale 124 peut présenter une section transversale plus particulièrement adaptée à une telle utilisation comme protection d'une arête, par exemple en prévoyant un retrait d'une partie de la face dorsale du côté de la face latérale 124 comme illustré dans les figures ou encore en prévoyant une épaisseur D plus grande de ce côté.

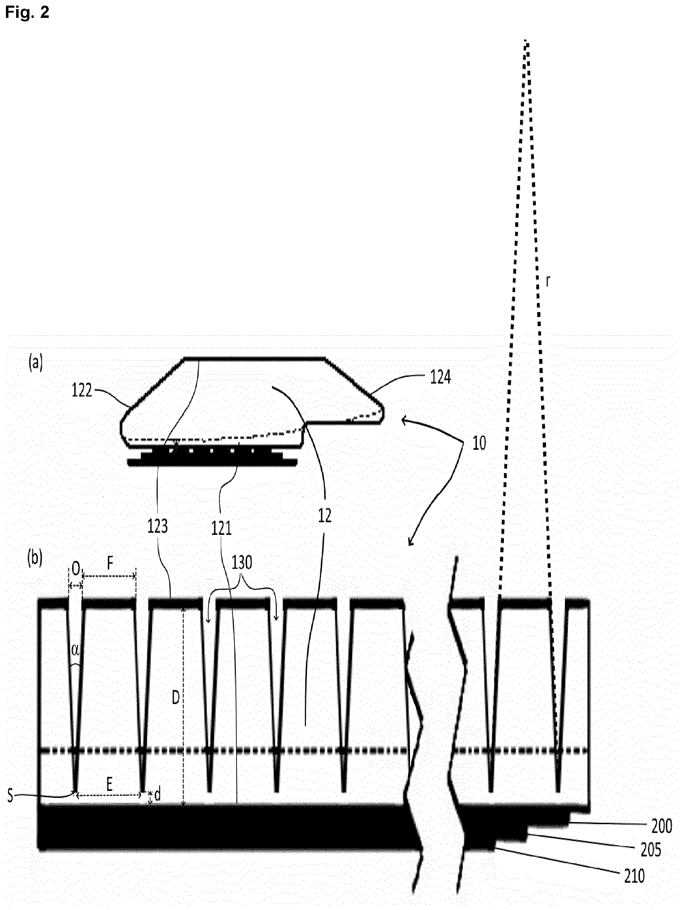

Les Fig. 2(a) et (b) sont des coupes transversale (a) et longitudinale (partielle) (b) du mode de réalisation illustré aux Fig. 1. Alors que la Fig. 2(a) montre les faces dorsale 121, frontale 123, latérales 122, 124 du corps d'amortissement 12 du dispositif de protection 10, la Fig. 2(b) illustre plus particulièrement la disposition des découpes en V 130 avec leur ouverture O orientée vers la face frontale 123 et leur sommet S vers la face dorsale 121. D est la distance maximale mesurée (en l'absence de contraintes) perpendiculairement à la face dorsale 121 entre celle-ci et la face frontale 123, en d'autres mots D est l'épaisseur (maximale) du corps d'amortissement 12. La distance d est la distance minimale entre la face dorsale 121 et le sommet S d'une découpe en V 130, à nouveau mesurée (en l'absence de contraintes) perpendiculairement à la face dorsale 121. L'angle α est l'angle d'ouverture des découpes en V 130, c'est-à-dire l'angle au sommet S formé par les deux branches du V, et la largeur O d'ouverture des découpes en V est mesurée au niveau de la face frontale 123 perpendiculairement à la découpe en V 130 à l'endroit où la distance D est maximale.

### Légende:

- 10: dispositif de protection
- 12: corps d'amortissement
- 121: face dorsale du corps d'amortissement
- 122: première face latérale du corps d'amortissement
- 123: face frontale du corps d'amortissement
- 124: deuxième face latérale du corps d'amortissement
- 130: découpes en V dans la face frontale
- 200: bande de colle thermofusible
- 205: bande adhésive
- 210: film ou papier de séparation
- α: angle d'ouverture des découpes en V
- d: distance minimale entre le sommet S d'une découpe en V et la face dorsale du corps d'amortissement
- D: distance (maximale) entre la face dorsale et frontale
- E: écartement entre les sommets S de deux découpes en V adjacentes
- O: (largeur de l')ouverture de la découpe en V au niveau de la face frontale
- F: distance de la face frontale non découpée entre deux découpes en V mesurée parallèlement à O
- S: sommet d'une découpe en V orienté vers la face dorsale
- r: rayon de courbure de concavité (minimal) de la surface à protéger

## Revendications

1. Dispositif de protection (10) d'une surface, en particulier une surface à protéger comprenant des sections concaves et/ou convexes, configuré en particulier à une installation amovible sur ladite surface à protéger, notamment une surface à protéger adjacente à une arête de carrosserie de véhicule, comprenant un corps d'amortissement (12) allongé formé d'un profilé en mousse polymère et comprenant une face dorsale (121), et une face frontale (123) opposée à la face dorsale ; la face dorsale (121) étant adhésivée au moins sur une partie de sa superficie, et le corps d'amortissement comprenant sur au moins une partie de sa longueur une pluralité de découpes parallèles en V (130), formant un angle de 70° à 110°, de préférence de 80° à 100°, notamment perpendiculaires, avec l'allongement du corps d'amortissement (12), dans lequel le sommet (S) de chaque découpe en V est orienté vers la face dorsale (121) et l'ouverture (O) vers la face frontale (123), le sommet (S) étant situé à une distance d de la face dorsale telle que 0 ≤ d ≤ 0,5 D, D étant la distance séparant la face frontale (123) de la face dorsale (121) et 3 mm ≤ D ≤ 100 mm, de préférence 5 mm ≤ D ≤ 90 mm.

2. Dispositif de protection (10) selon la revendication 1, dans lequel l'angle α d'ouverture formé par les découpes en V (130) se situe entre 5 et 50 °, de préférence entre 10 et 40°, en particulier entre 15 et 35°.

3. Dispositif de protection (10) selon la revendication 1 ou 2, dans lequel l'écartement E entre deux sommets S adjacents de découpes en V (130) est tel que 1 O ≤ E ≤ 10,0 O, de préférence 1,2 O ≤ E ≤ 7,5 O, de manière davantage préférée 1,4 O ≤ E ≤ 5,0 O et de manière particulièrement préférée 1,5 O ≤ E ≤ 3,0 O, O étant la largeur de l'ouverture d'une découpe en V mesurée à la face frontale (123).

4. Dispositif de protection (10) selon l'une quelconque des revendications 1 à 3, dans lequel le profilé en mousse polymère du corps d'amortissement (12) comprend un ou plusieurs polymères ou copolymères polaires ou apolaires, réticulés ou non-réticulés, d'oléfine, d'uréthane, de téréphtalate, de chlorure de vinyle, de styrène, de caoutchoucs naturels ou synthétiques, de silicones, et de mélanges de ces polymères, la mousse polymère ayant de préférence une densité de 10 kg/m³ à 400 kg/m³, de préférence de 15 kg/m³ à 200 kg/m³, en particulier de 20 kg/m³ à 100 kg/m³.

5. Dispositif de protection (10) selon l'une quelconque des revendications 1 à 4, dans lequel la section transversale du corps d'amortissement est de forme polygonale, convexe ou concave, de préférence à angles arrondis, de manière particulièrement préférée la section transversale du corps d'amortissement est de forme trapézoïdale, de préférence à angles arrondis.

6. Dispositif de protection (10) selon l'une quelconque des revendications 1 à 5, dans lequel la face dorsale est adhésivée par une ou de plusieurs bandes adhésives parallèles à l'allongement du corps d'amortissement (12).

7. Dispositif de protection (10) selon la revendication 6, dans lequel la ou les bandes adhésives sont des bandes de colle thermofusible auto-adhésive, des bandes adhésives double face ou des bandes adhésives simple face collées sur la face dorsale au moyen d'une colle, de préférence thermofusible.

8. Dispositif de protection (10) selon l'une quelconque des revendications 1 à 7, dans lequel la face dorsale (121) adhésivée comprend un film ou papier de séparation antiadhésif.

9. Dispositif de protection (10) selon l'une quelconque des revendications 1 à 7, configuré pour protéger une surface adjacente à une arête de carrosserie de véhicule, notamment l'arête d'un ouvrant ou battant, en particulier l'arête d'une portière de véhicule, le dispositif de protection (10) comprenant en outre une première (122) et une deuxième (124) faces latérales, la face dorsale (121) n'étant adhésivée que sur une section longitudinale de sa superficie adjacente à la première face latérale (122).

10. Dispositif de protection (10) selon la revendication 9, dans lequel la partie non adhésivée de la face dorsale (121) adjacente à la deuxième face latérale (124) est configurée pour faire saillie au-delà de l'arête de carrosserie.

11. Véhicule comprenant une surface de carrosserie munie d'un dispositif de protection selon l'une quelconque des revendications 1 à 10, ladite surface comprenant en particulier des sections concaves et/ou convexes, de préférence ladite surface est adjacente à une arête de la carrosserie, de manière davantage préférée elle est adjacente à une arête d'un ouvrant ou battant, en particulier elle est adjacente à une arête d'une portière du véhicule.

12. Véhicule selon la revendication 11, comprenant une surface de carrosserie munie d'un dispositif de protection selon l'une des revendications 9 ou 10, ladite surface étant adjacente à une arête de la carrosserie, de manière davantage préférée adjacente à une arête d'un ouvrant ou battant, en particulier adjacente à une arête d'une portière du véhicule.

13. Procédé de fabrication d'un dispositif de protection (10) selon l'une quelconque des revendications 1 à 10, comprenant les étapes de :
(a) production d'un corps d'amortissement (12) allongé en mousse polymère par extrusion,
(b) pratique de découpes en V (130) à un angle de 70° à 110°, de préférence de 80° à 100°, notamment perpendiculairement, par rapport au sens d'extrusion dans le corps d'amortissement (12),
(c) application sur la face dorsale (121) d'au moins une matière adhésive, de préférence en au moins une bande, et
(d) éventuellement, délignage consistant à découper le corps d'amortissement (12) ou le dispositif de protection (10) en longueurs prédéterminées,
les étapes (b), (c) et (d) pouvant être réalisées dans n'importe quel ordre, de préférence les étapes sont réalisées dans l'ordre (a), (b), (c) et éventuellement (d).

14. Procédé selon la revendication 13, dans lequel la matière adhésive est une colle thermofusible auto-adhésive, la matière adhésive étant fondue dans un fondoir et pompée à travers une buse d'injection pour déposer la matière adhésive en au moins une bande sur la face dorsale (121) ; ou dans lequel la matière adhésive est déposée en au moins une bande sur un papier de séparation qui est appliqué ensuite sur la face dorsale (121) ; ou dans lequel la matière adhésive est déposée en au moins une bande en continu sur un rouleau de transfert rotatif qui est en contact avec la face dorsale (121).

15. Procédé selon l'une des revendications 13 ou 14, dans lequel un gaz, de préférence l'azote, est injecté dans la matière adhésive.
